# EUROPEAN PATENT APPLICATION

(11) **EP 3 605 676 A1**
(43) Date of publication of application: **05.02.2020**
(21) Application number: 18772504.9
(22) Date of filing: 12.03.2018
(51) Int. Cl.: H01M 4/62

(54) **STORAGE METHOD FOR BINDER COMPOSITION**

(30) Priority: 24.03.2017 JP 2017058475
(71) Applicant: Zeon Corporation, Tokyo 100-8246 (JP)
(72) Inventor: KONDOU Yoshihisa, Tokyo 100-8246 (JP); YOSHIDA Naoki, Tokyo 100-8246 (JP); ARAI Kenji, Tokyo 100-8246 (JP)
(74) Representative: Maiwald Patent- und Rechtsanwaltsgesellschaft mbH
(86) International application number: PCT/JP2018/009542
(87) International publication number: WO 2018/173839

(57) **Abstract**

A binder composition storage method for storing a binder composition containing a binder and an organic medium in a fillable container includes: setting an oxygen concentration of 5 vol% or less and an absolute humidity of 2 g/kg or less for a gas phase portion of the fillable container after the binder composition has been stored in the fillable container for 3 months; and setting a water concentration of 1,000 ppm or less and a viscosity of 3,000 mPa·s or less for a liquid phase portion of the fillable container after the binder composition has been stored in the fillable container for 3 months.

## Description

### TECHNICAL FIELD

The present disclosure relates to a binder composition storage method for storing (preserving) a binder composition that is used for an electrochemical device component, such as an electrode, of an electrochemical device, such as a lithium ion secondary battery.

### BACKGROUND

Electrochemical devices, and particularly lithium ion secondary batteries, have characteristics such as small size, light weight, high energy density, and the ability to be repeatedly charged and discharged. These characteristics are being exploited, leading to rapid expansion of demand for such electrochemical devices. Moreover, the high energy density and power density of electrochemical devices, of which lithium ion secondary batteries are a representative example, means that use thereof is anticipated not only for small-scale applications such as mobile telephones and notebook personal computers, but also for large-scale applications such as in vehicles. Consequently, expansion and development of applications for such electrochemical devices has been accompanied by demand for further enhancement thereof in terms of, for example, lowering resistance, increasing capacity, increasing voltage endurance, improving mechanical properties, and improving cycle life.

A lithium ion secondary battery includes a positive electrode, a negative electrode, and a separator. The electrodes (positive electrode and negative electrode) are obtained by, for example, applying a slurry containing an electrode active material and a binder onto a current collector such as a metal foil, and drying the slurry to form an electrode active material layer. The separator may have a heat-resistant layer at the surface thereof that is obtained by, for example, applying a slurry containing a heat-resistant substance and a binder onto the separator, and then drying the slurry.

The binder is a polymer that, in production of each of the slurries described above, is used in the form of a binder composition having the polymer dispersed and/or dissolved in a liquid medium. Although an aqueous medium or an organic medium may be used as the liquid medium, an organic medium is used from a viewpoint of obtaining an effect of increasing initial capacity of a lithium ion secondary battery.

Examples of binder compositions in which an organic medium is used include an N-methylpyrrolidone (hereinafter, also referred to as "NMP") solution of a styrene-butadiene copolymer (hereinafter, also referred to as "SBR") such as disclosed in Patent Literature (PTL) 1 and 2, an NMP solution of a hydrogenated product of an acrylonitrile-butadiene copolymer (hereinafter, also referred to as "hydrogenated NBR" and "NBR", respectively) such as disclosed in PTL 3, and an NMP solution of NMP-soluble and NMP-insoluble polymer such as disclosed in PTL 4.

A binder composition in which an organic medium is used is normally stored in a container for a certain period after production and is subsequently used in production of an electrode or in formation of a heat-resistant layer. Binders are moisture sensitive, and thus in a case in which the organic medium displays hygroscopicity, like in the case of NMP, water concentration in the binder composition may increase during storage, and coatability may deteriorate due to polymer precipitating at the surface of an applied film and streaks forming during formation of an electrode active material layer or a heat-resistant layer.

Moreover, since a binder composition in which an organic medium is used is in a state having organic particles dispersed and/or a polymer dissolved in the organic medium, aggregates may form upon a slight change in conditions or environment during production or storage. Consequently, polymer aggregates readily form and coatability may deteriorate if the binder composition is stored in a container for a long time, such as for 3 months or longer. Specifically, poor coating of a slurry may reduce production efficiency, cause non-uniformity of the surface of an electrode active material layer or heat-resistant layer, and cause formation of protrusions at the surface of the electrode active material layer or heat-resistant layer, leading to the occurrence of a short or the like.

In terms of methods for storing binder compositions that are aimed at inhibiting the formation of aggregates, PTL 5 and 6 disclose that the space fraction of a container and the storage temperature may be used in the case of a binder composition of a carboxylic acid-containing nitrile polymer in which an aqueous medium is used. Moreover, PTL 7 discloses the use of relative humidity when a binder composition in which an aqueous medium is used is loaded into a fillable container.

However, studies conducted by the inventors have revealed that when the storage methods described in PTL 5 to 7 (i.e., methods using oxygen concentration, space volume inside a container, and storage temperature), which are storage methods for a binder composition in which an aqueous medium is used, are adopted in the same manner for a binder composition in which an organic medium is used, formation of aggregates cannot be inhibited.

### CITATION LIST

### Patent Literature

PTL 1: JP 2000-285924 A
PTL 2: JP 2006-66400 A
PTL 3: JP H8-157677 A
PTL 4: WO 2004/095613 A1
PTL 5: JP 5077612 B
PTL 6: JP 5146710 B
PTL 7: JP 2016-15254 A

### SUMMARY

### (Technical Problem)

An objective of the present disclosure is to provide a binder composition storage method that is for storing a binder composition in which an organic medium is used and that ensures good coatability of a slurry in which the binder composition is used after having been stored for a certain period.

### (Solution to Problem)

As a result of diligent investigation, the inventors discovered that the objective set forth above can be achieved by setting the oxygen concentration and absolute humidity of a gas phase portion in a fillable container and the water concentration and viscosity of a liquid phase portion in the fillable container to within specific ranges. This discovery led to the presently disclosed matter set forth below.

Specifically, the present disclosure provides the following.
(1) A binder composition storage method for storing a binder composition containing a binder and an organic medium in a fillable container, comprising:
   setting an oxygen concentration of 5 vol% or less and an absolute humidity of 2 g/kg or less for a gas phase portion of the fillable container after the binder composition has been stored in the fillable container for 3 months; and
   setting a water concentration of 1,000 ppm or less and a viscosity of 3,000 mPa·s or less for a liquid phase portion of the fillable container after the binder composition has been stored in the fillable container for 3 months.
(2) The binder composition storage method according to the foregoing (1), further comprising setting a temperature of not lower than 31°C and not higher than 70°C for the binder composition during loading of the binder composition into the fillable container.
(3) The binder composition storage method according to the foregoing (1) or (2), further comprising setting a temperature of not lower than 5°C and not higher than 35°C for the fillable container during loading of the binder composition into the fillable container.
(4) The binder composition storage method according to any one of the foregoing (1) to (3), wherein the binder composition that is loaded into the fillable container has a viscosity of 2,500 mPa·s or less.
(5) The binder composition storage method according to any one of the foregoing (1) to (4), wherein an atmosphere inside the fillable container during loading of the binder composition into the fillable container is set as an inert gas atmosphere having an oxygen concentration of 5 vol% or less and an absolute humidity of 2 g/kg or less.

### (Advantageous Effect)

According to the present disclosure, it is possible to provide a binder composition storage method that is for storing a binder composition in which an organic medium is used and that ensures good coatability of a slurry in which the binder composition is used after having been stored for a certain period.

### DETAILED DESCRIPTION

The following describes the presently disclosed binder composition storage method. The presently disclosed binder composition storage method is a method of storing a binder composition containing a binder and an organic medium in a fillable container that includes: setting an oxygen concentration of 5 vol% or less and an absolute humidity of 2 g/kg or less for a gas phase portion of the fillable container after the binder composition has been stored in the fillable container for 3 months; and setting a water concentration of 1,000 ppm or less and a viscosity of 3,000 mPa·s or less for a liquid phase portion of the fillable container after the binder composition has been stored in the fillable container for 3 months.

### (Fillable container)

The capacity of the fillable container used in the presently disclosed storage method is not specifically limited but is preferably from a few milliliters to tens of tons. The shape of the fillable container is also not specifically limited and may be a bottle shape or alternatively a shape like that of an oil can, a drum, a container tank, or the like.

Moreover, the material of the fillable container is not specifically limited and may, for example, be glass, resin, stainless metal, or the like. Note that the material of the fillable container preferably does not contain components that elute into a binder composition in which an organic medium such as NMP is used. From a viewpoint of ease of handling and absence of components that elute into a binder composition, the fillable container is preferably a stainless steel container, a polyethylene container, or an epoxy resin-coated container. It is also preferable that foreign matter of 1 µm or larger is not present inside the fillable container and that the fillable container is produced in a clean environment in which dust and foreign matter are not present.

### (Loading method)

The fillable container into which the binder composition has been loaded includes a gas phase portion and a liquid phase portion that is formed by the binder composition containing the binder and the organic medium. In the presently disclosed storage method, the gas phase portion after the binder composition has been stored inside the fillable container for 3 months has an oxygen concentration of 5 vol% or less, and preferably 3 vol% or less, and an absolute humidity of 2 g/kg or less, and preferably 1.5 g/kg or less. Moreover, the liquid phase portion after the binder composition has been stored inside the fillable container for 3 months has a water concentration of 1,000 ppm or less, and preferably 600 ppm or less, and a viscosity of 3,000 mPa·s or less, preferably 2,500 mPa·s or less, more preferably 2,000 mPa·s or less, and even more preferably 1,200 mPa·s or less.

If the oxygen concentration of the gas phase portion is too high, the binder composition may become unsuitable for use due to oxidation of the binder or organic medium and deterioration or coloring of the binder. Moreover, if the absolute humidity of the gas phase portion is too high, aggregates may form due to moisture absorption by the organic medium. Aggregates form at the interface between the gas phase and the liquid phase inside the fillable container, which means that discoloration of an upper layer of the liquid phase formed by the binder composition and sedimentation or floating of aggregates are observed in a case in which aggregate formation occurs.

Moreover, although aggregates tend not to form while the binder composition is in a fluid state, aggregates can form inside a fillable container because a fillable container is normally stored in a stationary state. Methods such as reducing the contact area between the liquid phase portion formed by the binder composition and the gas phase portion and reducing the volume of the gas phase portion may be adopted in order to inhibit formation of aggregates, but it is still difficult to inhibit formation of aggregates if the absolute humidity of the gas phase is too high. It is also difficult to redissolve or redisperse aggregates in the liquid phase once they have formed.

If the water concentration of the liquid phase portion is too high, coatability may deteriorate in terms that, for example, streaks may form at the surface of an applied film in formation of an electrode active material layer or a heat-resistant layer. Moreover, it may become difficult to apply a slurry containing the binder composition if the viscosity of the liquid phase portion is too high.

The ratio of the gas phase portion and the liquid phase portion inside the fillable container, in terms of a volume ratio (gas phase portion:liquid phase portion), is preferably 1:99 to 40:60, more preferably 10:90 to 35:65, and even more preferably 15:85 to 30:70. When the ratio of the gas phase portion and the liquid phase portion is within any of the ranges set forth above, it is possible to suppress a phenomenon in which formation of aggregates during storage cannot be inhibited due to the ratio of the gas phase portion being too high. It is also possible to suppress a phenomenon in which a rise in internal pressure or the like causes deformation or rupture of the container due to the ratio of the liquid phase portion being too high.

In order that the oxygen concentration and absolute humidity of the gas phase portion and the water concentration and viscosity of the liquid phase portion in the fillable container are within the ranges set forth above, it is preferable that the binder composition is loaded into the fillable container through a replacement step, a loading step, and a sealing step described below, for example.

In the replacement step, it is preferable that an operation of replacing air inside the fillable container with a loading atmosphere gas in advance is performed prior to loading the binder composition into the container. The loading atmosphere gas may be an inert gas such as nitrogen gas or argon gas. The inert gas used in the replacement step has an oxygen concentration of preferably 5 vol% or less, more preferably 3 vol% or less, and even more preferably 1 vol% or less, and an absolute humidity of preferably 2g/kg or less, and more preferably 1.5 g/kg or less.

For example, nitrogen gas produced using an air separator has an oxygen concentration of 0.5 vol% or less and an absolute humidity of 2 g/kg or less and can, therefore, be used to replace air inside the container. Moreover, nitrogen gas produced using an air separator is preferably passed through a filter of 0.1 µm or less from a viewpoint of preventing foreign matter from entering the fillable container.

Although no specific limitations are placed on the means of replacement of air inside the fillable container with the inert gas, a method in which a clean inert gas is supplied from the bottom of the fillable container so as to expel air from the container and replace the air with the inert gas is preferable in terms of efficiency. Specifically, a nozzle may be provided at the bottom of the fillable container and a pipe for supplying the inert gas may be connected to the nozzle such that the inert gas can be supplied to the nozzle via the pipe.

In the loading step, the fillable container for which the gas contained therein has been replaced by the inert gas in the replacement step is loaded with the binder composition in a working environment having a temperature of preferably not lower than 5°C and not higher than 45°C, and more preferably not lower than 10°C and not higher than 30°C.

The temperature of the binder composition in the loading step is preferably not lower than 31°C and not higher than 70°C. By setting the temperature of the binder composition within the range set forth above, it is possible to suppress a phenomenon in which the binder composition absorbs moisture in air and the water concentration of the binder composition increases due to the temperature of the binder composition being too low. Moreover, it is possible to suppress a phenomenon in which oxygen causes deterioration of the binder and also to suppress a phenomenon in which heat in cooling to room temperature causes deformation of the fillable container in a situation in which the fillable container into which the binder composition has been loaded is left and in which reduction in pressure inside the fillable container causes deformation of the fillable container in a situation in which the fillable container is tightly sealed, which are due to the temperature of the binder composition being too high. Note that the binder composition used in the loading step has preferably been filtered as described further below. In a situation in which the binder composition is filtered straight before loading using a filtration device having a filter made of resin, setting the temperature of the binder composition within the range set forth above can suppress a phenomenon in which deformation of the filter, reduction of filtration efficiency, or the like occurs, and the filtration device does not function normally due to the temperature of the binder composition being too high.

The viscosity of the binder composition in the loading step is preferably 2,500 mPa·s or less.

Moreover, the temperature of the fillable container in the loading step is preferably not lower than 5°C and not higher than 35°C, and more preferably not lower than 10°C and not higher than 30°C. By setting the temperature of the fillable container within any of the ranges set forth above, it is possible to suppress a phenomenon in which moisture in air adheres to the container through condensation due to the temperature of the fillable container being too low. Moreover, a phenomenon in which handling by an operator becomes difficult due to the temperature of the fillable container being too high can be suppressed and the occurrence of economic loss due to excessive heating energy being imparted can be suppressed.

The loading step is carried out under an atmosphere of an inert gas having an oxygen concentration of preferably 5 vol% or less, more preferably 3 vol% or less, and even more preferably 1 vol% or less, and an absolute humidity of preferably 2 g/kg or less, and more preferably 1.5 g/kg or less.

In the sealing step, the fillable container is preferably sealed after injecting an inert gas into the gas phase portion of the fillable container into which the binder composition has been loaded in the loading step. The method by which the inert gas is injected into the gas phase portion may, for example, be a method in which the inert gas is injected for a certain time at a certain flow rate from a loading port for the binder composition in the fillable container or a method in which a spout for spouting the inert gas is provided at the tip of a nozzle by which the binder composition is loaded and the inert gas is injected concurrently with loading of the binder composition.

Note that although the above describes an example in which a replacement step is performed prior to loading of the binder composition into the fillable container, alternatively, an inert gas may be fed into the fillable container concurrently with an injected solution in loading of the binder composition into the fillable container, or just the gas phase portion of the fillable container may be subjected to purging of air by a clean inert gas after the binder composition has been loaded into the fillable container.

The fillable container is stored after being sealed by a method such as airtight stoppering. In other words, the binder composition is stored inside the fillable container. The storage temperature is preferably not lower than 5°C and not higher than 35°C, and more preferably not lower than 10°C and not higher than 30°C. When the storage temperature is within any of the ranges set forth above, it is possible to suppress a phenomenon in which aggregates form on the wall of the fillable container upon long-term storage of 3 months or longer, for example, due to the storage temperature being too low. Moreover, it is possible to suppress a phenomenon of coloring or aggregate formation occurring upon long-term storage of 3 months or longer, for example, due to the storage temperature being too high.

Through the presently disclosed fillable container, the binder composition can be stored for 3 months or longer while maintaining the oxygen concentration and absolute humidity of the gas phase and the water concentration and viscosity of the liquid phase within specific ranges, and can further be stored for a long period such as 6 months or longer, 18 months or longer, or 24 months or longer.

### (Binder composition)

The binder composition used in the presently disclosed storage method contains a binder and an organic medium.

### (Binder)

Various polymer components that can be dissolved or dispersed in an organic medium may be used as the binder. For example, polyethylene, polypropylene, acid-modified polyolefin, a fluorovinyl polymer, a hydroxy group-containing olefin polymer, an acrylic acid polymer, an acrylic polymer, an acrylonitrile polymer, a diene polymer, a silicon-containing polymer, or the like may be used as the binder. One of these polymers may be used individually, or two or more of these polymers may be used in combination.

Of these polymers, it is preferable to use a diene polymer, an acrylic polymer, an acrylonitrile polymer, a fluorovinyl polymer, or a hydroxy group-containing olefin polymer. In particular, a copolymer of acrylonitrile, a (meth)acrylic acid ester, and other copolymerizable monomers is particularly preferable.

Specific examples of diene polymers include conjugated diene homopolymers such as polybutadiene and polyisoprene; aromatic vinyl-conjugated diene copolymers (random copolymers and block copolymers) such as SBR that are optionally carboxy modified and hydrogenated products thereof; and vinyl cyanide-conjugated diene copolymers such as NBR and hydrogenated NBR.

Specific examples of acrylic polymers include homopolymers of a derivative of acrylic acid or methacrylic acid and copolymers of a derivative of acrylic acid or methacrylic acid with a monomer copolymerizable therewith such as poly(butyl (meth)acrylate), poly(hydroxyethyl (meth)acrylate), polyacrylamide, and butyl acrylate-styrene copolymer. In the present disclosure, "(meth)acrylate" is used to indicate "acrylate" or "methacrylate".

Specific examples of acrylonitrile polymers include polyacrylonitrile; acrylonitrile-(meth)acrylic acid ester copolymers such as butyl acrylate-acrylonitrile copolymer and butyl acrylate-acrylonitrile-glycidyl methacrylate copolymer; and copolymers of acrylonitrile and a polar group-containing olefin compound that is copolymerizable with acrylonitrile. In the present disclosure, "(meth)acryl" is used to indicate "acryl" or "methacryl".

Specific examples of fluorovinyl polymers include polytetrafluoroethylene, polyvinylidene fluoride, and tetrafluoroethylene-hexafluoropropylene copolymer.

Specific examples of hydroxy group-containing olefin polymers include polyvinyl alcohol and ethylene-vinyl alcohol copolymer.

The binder is dissolved or dispersed in the organic medium. In a case in which the binder is dispersed, the binder is preferably in a particulate form and the particle diameter thereof is preferably 1 µm or less, more preferably 0.5 µm or less, and even more preferably 0.2 µm or less.

### (Organic medium)

The organic medium used in the binder composition is preferably an aprotic polar solvent. The boiling point of the organic medium at normal pressure is preferably not lower than 50°C and not higher than 350°C, more preferably not lower than 80°C and not higher than 300°C, and even more preferably not lower than 100°C and not higher than 250°C. Examples of organic media such as described above include amides such as N,N-dimethylformamide (DMF), diethylformamide, dimethylacetamide, NMP, tetramethylurea, and hexamethylphosphoramide (HMPA); sulfur compounds such as dimethyl sulfoxide (DMSO); ketones such as acetone, methyl ethyl ketone, and cyclohexanone; ethers such as tetrahydrofuran, 1,4-dioxane, 1,3-dioxolane, and diethylene glycol dimethyl ether; esters such as butyl acetate and ethylene glycol diacetate; and hydrocarbons such as heptane, octane, methylcyclohexane, limonene, toluene, and xylene. Of these organic media, amides, ketones, hydrocarbons, and the like are preferable, and NMP, xylene, and acetone are particularly preferable due to ease of acquisition, dispersibility of polymer therein, and good coatability of a slurry formulation onto a current collector. One of these organic media may be used individually, or two or more of these organic media may be used in combination.

Besides the binder and the organic medium, antioxidants, viscosity modifiers (for example, thickeners and viscosity stabilizers), surfactants, pigments, dispersion stabilizers, and the like may be added to the binder composition as necessary.

### (Production method of binder composition)

The method by which the binder composition containing the binder and the organic medium is produced may, for example, be a method in which a powder, pellets, or lumps of the binder are mixed with/dissolved in the organic medium or a method in which the organic medium is added to a water dispersion of the binder and then water is removed (for example, a method described in JP 2014-165096 A, JP 2014-165097 A, or the like).

The water concentration in the binder composition is preferably 1,000 ppm or less, and more preferably 800 ppm or less. When the water concentration in the binder composition is within any of the ranges set forth above, it is possible to suppress a phenomenon in which aggregates form due to the water concentration being too high.

It is preferable that solid material of 10 µm or larger is not present in the binder composition. Solid material is normally evaluated as particles. It is preferable that in 1 mL of the binder composition, the number of particles of 10 µm or larger is zero, the number of particles of 10 µm to 5 µm is 10 or fewer, and the number of particles of 5 µm to 1 µm is 100 or fewer. The method by which particles in the binder composition are reduced may, for example, be a method in which the binder composition is filtered using a filtration device.

A filter is installed in the filtration device and particles are removed from the binder composition through this filter. The filter is not specifically limited and may, for example, be a cartridge filter or a filter in which a filter aid is used. Of these examples, a cartridge filter is preferable.

Moreover, high precision filtration can be carried out using a depth filter. The depth filter may, for example, be a filter having a layered structure in which filtration membranes having numerous holes formed therein are stacked or a filter in which a fiber bundle is wound up. Specific examples of depth filters include Profile II, Nexis NXA, Poly-Fine XLD, Ultipleat Profile, and the like produced by Nihon Pall Ltd.; Depth Cartridge Filter, Wound Cartridge Filter, and the like produced by Advantec Co., Ltd.; CP Filter, BM Filter, and the like produced by Chisso Corporation; and SLOPE-PURE, DIA, MICRO-CILIA, and the like produced by Roki Techno Co., Ltd.

It is preferable that a filter having a filtration precision of 5 µm is used in the filtration. The binder composition that has been filtered is subsequently transferred, loaded into the fillable container as previously described, and then stored.

### (Use of binder composition)

The binder composition that is loaded into the fillable container used in the presently disclosed storage method may be used in production of a battery component, such as in formation of an electrode active material layer or undercoat layer and/or in formation of a heat-resistant layer, or may be used as a fixative, a sealant, or the like for battery components in production of a power storage device.

### (Electrode active material layer)

The electrode active material layer contains the previously described binder composition, an electrode active material, and, as necessary, a conductive material for an electrode, and is prepared from a slurry for an electrode that contains these components.

### (Electrode active material)

The electrode active material may be a negative electrode active material or a positive electrode active material. The electrode active material is a material that gives and receives electrons inside a battery. The following describes a case in which the electrode active material is used in a lithium ion secondary battery.

The positive electrode active material is a compound that can occlude and release lithium ions. Positive electrode active materials are broadly categorized as those formed by inorganic compounds and those formed by organic compounds.

Examples of positive electrode active materials formed by inorganic compounds include transition metal oxides, composite oxides of lithium and a transition metal, and transition metal sulfides. The transition metal may be Fe, Co, Ni, Mn, or the like. Specific examples of inorganic compounds that are used as positive electrode active materials include lithium-containing composite metal oxides such as LiCoO₂, LiNiO₂, LiMnO₂, LiMn2O₄, LiFePO₄, and LiFeVO₄; transition metal sulfides such as TiS₂, TiS₃, and amorphous MoS₂; and transition metal oxides such as Cu₂V₂O₃, amorphous V₂O-P₂O₅, MoO₃, V₂O₅, and V₆O₁₃. These compounds may have been subjected to partial element substitution.

Examples of positive electrode active materials formed by organic compounds include polyaniline, polypyrrole, polyacene, disulfide compounds, polysulfide compounds, and N-fluoropyridinium salts. Note that the positive electrode active material may be a mixture of an inorganic compound and an organic compound such as described above.

The negative electrode active material may be a carbon allotrope such as graphite or coke. A negative electrode active material formed by a carbon allotrope may be used in a mixed or coated form with a metal, a metal salt, an oxide, or the like. Examples of negative electrode active materials also include oxides and sulfides of silicon, tin, zinc, manganese, iron, nickel, and the like, lithium metal, lithium alloys such as Li-Al, Li-Bi-Cd, and Li-Sn-Cd, lithium transition metal nitrides, and silicone.

The volume-average particle diameter of the electrode active material, both for a positive electrode active material and a negative electrode active material, is normally not less than 0.01 µm and not more than 100 µm, preferably not less than 0.05 µm and not more than 50 µm, and more preferably not less than 0.1 µm and not more than 20 µm. These electrode active materials may be used individually or as a combination of two or more types.

### (Binder composition)

The binder composition may be the previously described binder composition. The amount of the binder that is used per 100 parts by mass of the electrode active material is preferably not less than 0.1 parts by mass and not more than 50 parts by mass, more preferably not less than 0.5 parts by mass and not more than 20 parts by mass, and even more preferably not less than 1 part by mass and not more than 10 parts by mass from a viewpoint of ensuring adequate close adherence between the obtained electrode active material layer and a current collector, increasing secondary battery capacity, and reducing secondary battery internal resistance.

### (Conductive material for electrode)

The conductive material for an electrode that is used as necessary is formed by a particulate carbon allotrope that is conductive and does not have pores that can form an electric double layer. Specific examples include conductive carbon black such as furnace black, acetylene black, and Ketjenblack® (Ketjenblack is a registered trademark of Akzo Nobel Chemicals Besloten Vennootschap). Of these conductive materials, acetylene black and furnace black are preferable.

### (Electrode active material layer)

The electrode active material layer is provided on a current collector but no specific limitations are placed on the method by which the electrode active material layer is formed. A slurry for an electrode can be prepared by compounding a conductive material for an electrode, a dispersant, and other additives, as necessary, with the electrode active material and the binder composition that are essential components. Specific examples of dispersants include polyvinylidene fluoride; polytetrafluoroethylene; cellulosic polymers such as carboxymethyl cellulose, methyl cellulose, ethyl cellulose, and hydroxypropyl cellulose, and ammonium salts and alkali metal salts thereof; poly(meth)acrylic acid salts such as sodium poly(meth)acrylate; polyvinyl alcohol; modified polyvinyl alcohol; polyethylene oxide; polyvinyl pyrrolidone; polycarboxylic acid; starch oxide; starch phosphate; casein; and various modified starches. These dispersants may be used individually or as a combination of two or more types. Although no specific limitations are placed on the amount of these dispersants that is used, the amount per 100 parts by mass of the electrode active material is normally not less than 0.1 parts by mass and not more than 10 parts by mass, preferably not less than 0.5 parts by mass and not more than 5 parts by mass, and more preferably not less than 0.8 parts by mass and not more than 2 parts by mass.

### (Preparation of slurry for electrode)

In a situation in which an electrode active material layer is to be formed, a slurry for an electrode (slurry for positive electrode or slurry for negative electrode) in the form of a paste can be produced by kneading essential components such as the electrode active material and the binder composition, and also the conductive material for an electrode, dispersant, and additives that are used as necessary, in an organic solvent such as NMP or tetrahydrofuran.

The solvent used in order to obtain the slurry for an electrode is not specifically limited and may be the organic medium that is used in the binder composition.

From a viewpoint of uniformly dispersing components, the amount of solvent that is used in preparation of the slurry for an electrode is normally an amount such that the solid content concentration of the slurry is not less than 1 mass% and not more than 90 mass%, preferably not less than 5 mass% and not more than 85 mass%, and more preferably not less than 10 mass% and not more than 80 mass%.

No specific limitations are placed on the method or procedure by which the electrode active material, the binder composition, and the conductive material for an electrode, dispersant, and additives that are optionally used are dispersed or dissolved in the solvent. Examples of methods that may be adopted include a method in which the electrode active material, the binder composition, the conductive material for an electrode, the dispersant, and the additives are added to and mixed with a solvent; a method in which the dispersant is dissolved in a solvent, the binder composition dispersed in a solvent is subsequently added and mixed therewith, and finally the electrode active material and the conductive material for an electrode are added and mixed therewith; and a method in which the electrode active material and the conductive material for an electrode are added to and mixed with the binder composition dispersed in a solvent, and then a dispersant that is dissolved in a solvent is added to and mixed with this mixture. The means of mixing may be a mixer such as a ball mill, a sand mill, a bead mill, a pigment disperser, a grinding machine, an ultrasonic disperser, a homogenizer, a Homo Mixer, or a planetary mixer. The mixing is normally performed for 10 minutes to several hours in a temperature range of room temperature to 80°C.

The viscosity of the slurry for an electrode at room temperature is normally not less than 10 mPa·s and not more than 100,000 mPa·s, preferably not less than 30 mPa·s and not more than 50,000 mPa·s, and more preferably not less than 50 mPa·s and not more than 20,000 mPa·s from a viewpoint that productivity can be increased.

### (Formation of electrode active material layer)

No specific limitations are placed on the method by which the slurry for an electrode is applied onto a current collector. Examples include doctor blading, dip coating, reverse roll coating, direct roll coating, gravure coating, extrusion coating, and brush coating. The application thickness of the slurry can be set as appropriate depending on the target electrode active material layer thickness.

Examples of drying methods that may be used include drying by warm, hot, or low-humidity air, drying in a vacuum, and drying by irradiation with (far-)infrared light or electron beams. Of these methods, drying by irradiation with far-infrared light is preferable. The drying temperature and the drying time are preferably a temperature and time that enable complete removal of the solvent in the slurry for an electrode that has been applied onto the current collector. The drying temperature may be not lower than 100°C and not higher than 300°C, and preferably not lower than 120°C and not higher than 250°C. The drying time is normally not less than 5 minutes and not more than 100 hours, and preferably not less than 10 minutes and not more than 20 hours.

The density of the electrode active material layer is not specifically limited but is normally not less than 0.30 g/cm³ and not more than 10 g/cm³, preferably not less than 0.35 g/cm³ and not more than 8.0 g/cm³, and more preferably not less than 0.40 g/cm³ and not more than 6.0 g/cm³. Moreover, the thickness of the electrode active material layer is not specifically limited but is normally not less than 5 µm and not more than 1,000 µm, preferably not less than 20 µm and not more than 500 µm, and more preferably not less than 30 µm and not more than 300 µm.

### (Electrode for electrochemical device)

An electrode for an electrochemical device can be produced by forming an electrode active material layer containing an electrode active material on a current collector as set forth above.

### (Heat-resistant layer)

The heat-resistant layer may be provided on an electrode or a separator substrate. The electrode may be an electrode that is obtained by the method set forth above and the separator substrate may be a commonly known separator substrate such as a microporous membrane or a non-woven fabric containing polyolefin resin (for example, polyethylene or polypropylene), aromatic polyamide resin, or cellulose fibers; or a porous resin coating containing an inorganic ceramic powder. Of these examples, a microporous membrane formed of polyolefin resin is preferable.

The heat-resistant layer contains the previously described binder composition, a heat-resistant substance, and other substances and is prepared from a slurry for a heat-resistant layer that contains these components.

### (Heat-resistant substance)

The heat-resistant substance may, for example, be inorganic particles or organic particles. Examples of inorganic particles that may be used include particles of oxides such as aluminum oxide, silicon oxide, magnesium oxide, titanium oxide, BaTiO₂, ZrO, and alumina-silica composite oxide; particles of nitrides such as aluminum nitride and boron nitride; particles of covalent crystals such as silicone and diamond; particles of sparingly soluble ionic crystals such as barium sulfate, calcium fluoride, and barium fluoride; and fine particles of clays such as talc and montmorillonite. These particles may be subjected to element substitution, surface treatment, solid solution treatment, or the like as necessary. Moreover, one type of these particles may be used individually, or two or more types of these particles may be used in combination. Of these inorganic particles, oxide particles are preferable due to stability in electrolyte solution and potential stability when a non-aqueous secondary battery is produced.

The organic particles preferably have a melting temperature of 130°C or higher, more preferably 150°C or higher, and particularly preferably 180°C or higher. Specific examples include particles of various crosslinked polymers such as crosslinked poly(methyl methacrylate), crosslinked polystyrene, crosslinked polydivinylbenzene, crosslinked styrene-divinylbenzene copolymer, polyimide, polyamide, polyamide imide, melamine resin, phenolic resin, and benzoguanamine-formaldehyde condensate; and particles of heat-resistant polymers such as polysulfone, polyacrylonitrile, polyaramid, polyacetal, and thermoplastic polyimide. Moreover, the organic resin (polymer) forming these organic particles may be a mixture, modified product, derivative, copolymer (random copolymer, alternating copolymer, block copolymer, or graft copolymer), or crosslinked product (in the case of a heat-resistant polymer) of any of the materials listed above as examples.

From a viewpoint of ease of controlling the dispersion state and obtaining a homogeneous heat-resistant layer of a certain thickness, the average particle diameter of the heat-resistant substance (volume-average particle diameter (D50)) is normally 0.1 µm or more, and preferably 0.2 µm or more, and is normally 5 µm or less, preferably 2 µm or less, and more preferably 1 µm or less.

### (Preparation of slurry for heat-resistant layer)

A solvent may be added in preparation of the slurry for a heat-resistant layer. This solvent may, for example, be an organic medium that can be used in the previously described binder composition.

Other substances that may be included are not specifically limited so long as they do not cause loss of function as a heat-resistant layer for a secondary battery and examples thereof include a thickener and a surfactant. Examples of thickeners that may be used include water-soluble polysaccharides (for example, carboxymethyl cellulose), sodium polyacrylate, polyethyleneimine, polyvinyl alcohol, and polyvinyl pyrrolidone.

Although no specific limitations are placed on the solid content concentration of the slurry for a heat-resistant layer other than being a concentration such that the slurry for a heat-resistant layer is of a viscosity that enables application thereof, the solid content concentration is normally not less than 10 mass% and not more than 60 mass%.

The mixer used to uniformly mix the slurry for a heat-resistant layer is not specifically limited other than being a device that can uniformly mix the components and may, for example, be a ball mill, a sand mill, a pigment disperser, a grinding machine, an ultrasonic disperser, a homogenizer, a planetary mixer, or the like.

### (Formation of heat-resistant layer)

No specific limitations are placed on the method by which the slurry for a heat-resistant layer is applied onto the electrode or the separator substrate. Examples include doctor blading, dip coating, reverse roll coating, direct roll coating, gravure coating, extrusion coating, and brush coating. The application thickness of the slurry for a heat-resistant layer can be set as appropriate depending on the target heat-resistant layer thickness.

Examples of drying methods that may be used to dry the applied slurry for a heat-resistant layer include drying by warm, hot, or low-humidity air, drying in a vacuum, and drying by irradiation with (far-)infrared light or electron beams. Of these methods, drying by irradiation with far-infrared light is preferable. The drying temperature and the drying time are preferably a temperature and time that enable complete removal of the solvent in the applied slurry. The drying temperature may be not lower than 100°C and not higher than 300°C, and preferably not lower than 120°C and not higher than 250°C. The drying time is normally not less than 5 minutes and not more than 100 hours, and preferably not less than 10 minutes and not more than 20 hours.

### (Electrochemical device)

The mode of use of the electrode for an electrochemical device described above and/or a separator on which the heat-resistant layer described above is formed may be in a lithium ion secondary battery, an electric double-layer capacitor, a lithium ion capacitor, a sodium battery, a magnesium battery, or the like. A lithium ion secondary battery in which the electrode described above is used is preferable. For example, the lithium ion secondary battery may include a positive electrode, a negative electrode, a separator, and an electrolyte solution, wherein the electrode for an electrochemical device described above is used as the positive electrode, the electrode for an electrochemical device described above is used as the negative electrode, and a separator on which the heat-resistant layer described above is formed is used as the separator. Note that a binder composition that has been stored by the presently disclosed binder composition storage method may be used for one or more of the positive electrode, the negative electrode, and the separator.

### (Electrolyte solution)

The electrolyte solution may, for example, be an electrolyte solution obtained by dissolving a lithium salt as a supporting electrolyte in a non-aqueous solvent but is not specifically limited thereto. Examples of lithium salts that may be used include LiPF₆, LiAsF₆, LiBF4, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. In particular, LiPF₆, LiClO₄, and CF₃SO₃Li are suitable since they readily dissolve in solvent and display a high degree of dissociation. These lithium salts may be used individually or as a mixture of two or more types. The amount of the supporting electrolyte relative to the electrolyte solution is normally 1 mass% or more, and preferably 5 mass% or more, and is normally 30 mass% or less, and preferably 20 mass% or less. If the amount of the supporting electrolyte is too small or too large, ion conductivity decreases, and charge characteristics and discharge characteristics of the battery deteriorate.

No specific limitations are placed on the solvent used in the electrolyte solution so long as the supporting electrolyte can dissolve therein. Typically used examples include alkyl carbonates such as dimethyl carbonate (DMC), ethylene carbonate (EC), diethyl carbonate (DEC), propylene carbonate (PC), butylene carbonate (BC), and methyl ethyl carbonate (MEC); esters such as γ-butyrolactone and methyl formate; ethers such as 1,2-dimethoxyethane and tetrahydrofuran; and sulfur-containing compounds such as sulfolane and dimethyl sulfoxide. In particular, dimethyl carbonate, ethylene carbonate, propylene carbonate, diethyl carbonate, and methyl ethyl carbonate are preferable since high ion conductivity can be easily obtained and these solvents have a wide useable temperature range. These solvents may be used individually or as a mixture of two or more types. Moreover, the electrolyte solution may be used with additives contained therein. Carbonate compounds such as vinylene carbonate (VC) are preferable as additives.

Examples of electrolyte solutions that may be used, other than those described above, include a gel-form polymer electrolyte obtained by impregnating a polymer electrolyte such as polyethylene oxide or polyacrylonitrile with an electrolyte solution and an inorganic solid electrolyte such as lithium sulfide, LiI, Li₃N, or Li₂S-P₂S₅ glass-ceramic.

The secondary battery can be obtained by stacking the negative electrode and the positive electrode with the separator therebetween, rolling or folding the resultant stack in accordance with the battery shape, placing the stack in a battery container, injecting the electrolyte solution into the battery container, and sealing the battery container. An expanded metal, an overcurrent preventing device such as a fuse or a PTC device, a lead plate, or the like may be placed inside the battery container as necessary in order to prevent pressure increase inside the battery and occurrence of overcharging and overdischarging. The shape of the battery may be a laminate cell type, coin type, button type, sheet type, cylinder type, prismatic type, flat type, or the like.

### EXAMPLES

The following provides a more specific description of the present disclosure through examples. However, the present disclosure is not limited to the following examples and may be implemented with any changes that do not deviate from the scope of the essence of the present disclosure and equivalents thereof. In the following description, "%" and "parts" used to express quantities are by mass, unless otherwise specified. Moreover, operations described below were performed under normal temperature conditions (range of 20°C to 30°C), unless otherwise specified.

Evaluations in the examples and comparative examples were carried out as described below.

### (1) Measurement of oxygen concentration of gas phase portion

The oxygen concentration of a gas phase portion in a fillable container was measured using an oxygen analyzer IS-700 (produced by Iijima Electronics Corporation). Note that in a case in which the volume of the gas phase portion in the fillable container was 0.5 L or less, a gas suction tube of the oxygen analyzer was purged with nitrogen and then oxygen concentration was measured while carrying out a circulation operation in which sample gas was sucked into the oxygen analyzer and then returned to the gas phase portion of the fillable container at a rate of 2 L/min.

### (2) Measurement of water content (absolute humidity) of gas phase portion

The absolute humidity of a gas phase portion in a fillable container was measured using a dew point meter (MI1T3321 produced by Shiro Industry Co.), and the water content per kilogram of the gas phase portion was determined in units of g/kg.

### (3) Measurement of water content of liquid phase portion

The water content in a binder composition (liquid phase portion in fillable container) obtained in each example or comparative example was measured by the Karl Fischer method (JIS K-0068(2001); water vaporization method; vaporization temperature: 200°C) using a coulometric titration water meter.

### (4) Measurement of viscosity of liquid phase portion

The viscosity of a liquid phase portion in a fillable container was measured by a B-type rotary viscometer (produced by Tokyo Keiki Inc.) at a temperature of 25°C.

### (5) Preservation stability (color change and aggregates)

### (5-1) Color change

With regards to a fillable container loaded with a binder composition in each example or comparative example, the color of the liquid phase in proximity to an interface between the gas phase and the liquid phase was observed by eye at the start of storage and 3 months after the start of storage. The change in color was recorded relative to the color of the liquid phase portion in proximity to the interface between the gas phase portion and the liquid phase portion at the start of storage. This color change was evaluated by the following standard. The results are shown in Tables 1 and 2. A high level of coloring (i.e., color change) indicates deterioration of the binder composition.

### <Evaluation standard>

A: Same color and transparency as binder composition before preservation
B: Slight increase in coloring compared to binder composition before preservation
C: Noticeable coloring compared to binder composition before preservation
D: Significant coloring and deterioration of transparency

### (5-2) Aggregates

In each example and comparative example, the presence of aggregates at the bottom of a fillable container into which a binder composition had been loaded was inspected by eye after 3 months had passed from the start of storage. The amount of formed aggregates was evaluated by the following standard. The results are shown in Tables 1 and 2. Formation of a large amount of aggregates indicates that a poorer yield will be obtained during coating.

### <Evaluation standard>

A: Aggregates not observed
B: Slight clouding observed
C: Obvious clouding observed
D: Clear sedimentation of aggregates

### (6) Evaluation of coatability (aggregates and pinholes)

After the binder composition obtained in each example or comparative example had been stored in a fillable container for 3 months, the binder composition was used to prepare a slurry for a heat-resistant layer as described below. The slurry for a heat-resistant layer was applied onto a negative electrode (mass per unit area: 10 mg/cm²; active material layer density: 1.5 g/cm³; chemical composition (mass ratio): carbon-coated natural graphite (specific surface area: 3 m²/g):carboxymethyl cellulose (CMC):SBR (binder) = 100/1.5/1.5) by a bar coater under conditions such as to have a post-drying thickness of 4 µm. The slurry for a heat-resistant layer was dried in a 120°C oven for 20 minutes.

The resultant film was cut out to dimensions of 30 cm × 30 cm, and a ×20 magnifying glass was used to measure the number of bulges of 0.1 mm or more in diameter by eye. Note that bulges are caused by aggregates. At the same time, the number of pinholes of 0.1 mm or more in diameter was measured. The measured number of aggregates and number of pinholes were evaluated by the following standards. The results are shown in Tables 1 and 2. A larger number of aggregates results in a poorer yield. Moreover, coatability is better and the yield improves when the number of aggregates and the number of pinholes are small.

The slurry for a heat-resistant layer was produced as follows. First, non-conductive fine particles (alumina; volume-average particle diameter: 0.5 µm) as a heat-resistant substance and the binder composition were mixed such as to have a content ratio (ratio in terms of solid content) of 100:3. Next, NMP was added to adjust the solid content concentration to 40% and premixing was performed using a disper blade. Further dispersing was then performed at a circumferential speed of 40 m/s using a cone mill disperser (IKA MKO produced by IKA) to obtain the slurry for a heat-resistant layer.

### <Evaluation standard (aggregates)>

A: Number of bulges is 0
B: Number of bulges is not less than 1 and less than 5
C: Number of bulges is not less than 5 and less than 10
D: Number of bulges is 10 or more

### <Evaluation standard (pinholes)>

A: Number of pinholes is 0
B: Number of pinholes is 1 or less
C: Number of pinholes is not less than 2 and less than 6
D: Number of pinholes is not less than 6 and less than 10
E: Number of pinholes is 10 or more

### (Example 1)

A binder composition that contained NMP and 9.0% of solid content of an acrylic polymer obtained by polymerizing a monomer composition containing 79.4 parts of butyl acrylate, 16.7 parts of acrylonitrile, 3.3 parts of glycidyl methacrylate, and 0.6 parts of 2-acrylamido-2-methylpropane sulfonic acid was prepared in a feedstock tank. The binder composition had a water concentration of 500 ppm and a viscosity of 630 mPa·s. The temperature of the binder composition in the feedstock tank was maintained at 50°C.

The binder composition was filtered through a filter (CP-5 produced by Chisso Corporation) having a rated filtration precision of 5 µm and was subsequently loaded into a clean 15.8 L fillable container (POLYCON 13SL produced by Sekisui Seikei Co., Ltd.) made of high-density polyethylene that had a loading port size of 30 mm in diameter and included a lid made of polyethylene and a screw-type cap made of resin. Specifically, 13 kg of the binder composition was loaded into the container such that the volume of space inside the container was 2.8 L. In other words, a gas phase portion constituted 17.7 vol% of the fillable container. The loading environment in which loading was performed had a temperature of 25°C. Moreover, the temperature of the fillable container at the start of loading was 25°C.

Prior to loading, nitrogen gas having an oxygen concentration of 0.1 vol% and an absolute humidity of 0.6 g/kg was fed from the bottom of the container as a loading atmosphere gas at a rate of 1.5 L/min for 12 minutes to perform purging and thereby expel air from the fillable container. It was confirmed that the oxygen concentration and the absolute humidity inside the fillable container were the same as those of the loading atmosphere gas.

In addition, once the binder composition had been loaded into the fillable container, but prior to sealing of the fillable container, the loading atmosphere gas described above was blown into the gas phase portion of the fillable container from the loading port at a rate of 1 L/min for 20 seconds, and then the fillable container was sealed (stoppered airtight). The gas phase portion in the fillable container had an oxygen concentration of 0.1 vol% and an absolute humidity of less than 1 g/kg.

Note that when the nitrogen gas used in this example was measured using a handheld particle counter (KC-52 produced by Rion Co., Ltd.), the number of particles of 0.3 µm or more in diameter that were contained in the nitrogen gas was 0. When the binder composition that had been loaded into the fillable container was measured 1 day after loading, the binder composition was a slightly brown transparent liquid having a viscosity of 650 mPa·s and a water concentration of 500 ppm. Moreover, when coatability was evaluated using the binder composition 1 day after loading, aggregates and pinholes were not observed.

The fillable container into which the binder composition had been loaded was stored for 3 months at normal temperature inside a desiccator having a nitrogen gas atmosphere with an oxygen concentration of 0.1 vol% and an absolute humidity of 1 g/kg or less. After this storage, the oxygen concentration and the absolute humidity of the gas phase portion in the fillable container were checked, and the binder composition in the container was evaluated. The results are shown in Table 1.

### (Example 2)

A binder composition was loaded into a fillable container, the fillable container was sealed, and then the fillable container was stored for 3 months in the same way as in Example 1 with the exception that the temperature of the binder composition in the feedstock tank was changed to 35°C. After this storage, the oxygen concentration and the absolute humidity of the gas phase portion in the fillable container were checked, and the binder composition in the container was evaluated. The results are shown in Table 1.

### (Example 3)

A binder composition was loaded into a fillable container, the fillable container was sealed, and then the fillable container was stored for 3 months in the same way as in Example 1 with the exception that the temperature of the binder composition in the feedstock tank was changed to 65°C. After this storage, the oxygen concentration and the absolute humidity of the gas phase portion in the fillable container were checked, and the binder composition in the container was evaluated. The results are shown in Table 1.

### (Example 4)

A binder composition was loaded into a fillable container, the fillable container was sealed, and then the fillable container was stored for 3 months in the same way as in Example 1 with the exception that the loading atmosphere gas was changed to argon gas having an oxygen concentration of 0.1 vol% and an absolute humidity of 1.1 g/kg. After this storage, the oxygen concentration and the absolute humidity of the gas phase portion in the fillable container were checked, and the binder composition in the container was evaluated. The results are shown in Table 1.

### (Example 5)

A binder composition was loaded into a fillable container, the fillable container was sealed, and then the fillable container was stored for 3 months in the same way as in Example 1 with the exception that the temperature of the binder composition in the feedstock tank was changed to 35°C, the temperature of the loading environment was changed to 10°C, and the temperature of the fillable container at the start of loading was changed to 10°C. After this storage, the oxygen concentration and the absolute humidity of the gas phase portion in the fillable container were checked, and the binder composition in the container was evaluated. The results are shown in Table 1.

### (Example 6)

A binder composition was loaded into a fillable container, the fillable container was sealed, and then the fillable container was stored for 3 months in the same way as in Example 1 with the exception that the loading atmosphere gas was changed to argon gas having an oxygen concentration of 3.0 vol% and an absolute humidity of 1.1 g/kg. After this storage, the oxygen concentration and the absolute humidity of the gas phase portion in the fillable container were checked, and the binder composition in the container was evaluated. The results are shown in Table 1.

### (Example 7)

The chemical composition of the binder composition was changed to a composition of NMP and hydrogenated acrylonitrile-butadiene rubber as a diene polymer. The binder composition contained 12% of solid content of the diene polymer and had a water concentration of 200 ppm and a viscosity of 1,400 mPa·s. With the exception that the binder composition described above was used, the binder composition was loaded into a fillable container, the fillable container was sealed, and then the fillable container was stored for 3 months in the same way as in Example 1. After this storage, the oxygen concentration and the absolute humidity of the gas phase portion in the fillable container were checked, and the binder composition in the container was evaluated. The results are shown in Table 1.

When coatability was evaluated using the binder composition 1 day after loading, aggregates and pinholes were not observed.

### (Example 8)

The chemical composition of the binder composition was changed to a composition of NMP and polyvinylidene fluoride as a fluorovinyl polymer. The binder composition contained 8.0% of solid content of the fluorovinyl polymer and had a water concentration of 350 ppm and a viscosity of 2,050 mPa·s. With the exception that the binder composition described above was used, the binder composition was loaded into a fillable container, the fillable container was sealed, and then the fillable container was stored for 3 months in the same way as in Example 1. After this storage, the oxygen concentration and the absolute humidity of the gas phase portion in the fillable container were checked, and the binder composition in the container was evaluated. The results are shown in Table 1.

When coatability was evaluated using the binder composition 1 day after loading, aggregates and pinholes were not observed.

### (Comparative Example 1)

A binder composition was loaded into a fillable container in the same way as in Example 1 with the exception that the loading atmosphere gas was changed to air having an oxygen concentration of 20.5 vol% and an absolute humidity of 5.5 g/kg, the temperature of the binder composition in the feedstock tank was changed to 10°C, the temperature of the loading environment was changed to 10°C, and the temperature of the fillable container at the start of loading was changed to 10°C. However, condensation formed on the wall of the fillable container straight after loading, and thus the fillable container was not suitable for storage. Therefore, evaluations were not carried out. The results are shown in Table 2.

### (Comparative Example 2)

A binder composition was loaded into a fillable container, the fillable container was sealed, and then the fillable container was stored for 3 months in the same way as in Example 1 with the exception that the temperature of the binder composition in the feedstock tank was changed to 10°C. After this storage, the oxygen concentration and the absolute humidity of the gas phase portion in the fillable container were checked, and the binder composition in the container was evaluated. The results are shown in Table 2.

### (Comparative Example 3)

A binder composition was loaded into a fillable container, the fillable container was sealed, and then the fillable container was stored for 3 months in the same way as in Example 1 with the exception that nitrogen gas used as the loading atmosphere gas was changed to nitrogen gas having an oxygen concentration of 0.1 vol% and an absolute humidity of 3.0 g/kg. Note that the humidity of the nitrogen gas was adjusted using a sprayer (Dry Fog produced by H.Ikeuchi & Co., Ltd.). After this storage, the oxygen concentration and the absolute humidity of the gas phase portion in the fillable container were checked, and the binder composition in the container was evaluated. The results are shown in Table 2.

### (Comparative Example 4)

A binder composition was loaded into a fillable container, the fillable container was sealed, and then the fillable container was stored for 3 months in the same way as in Example 1 with the exception that nitrogen gas used as the loading atmosphere gas was changed to nitrogen gas having an oxygen concentration of 9.0 vol% and an absolute humidity of 0.8 g/kg. After this storage, the oxygen concentration and the absolute humidity of the gas phase portion in the fillable container were checked, and the binder composition in the container was evaluated. The results are shown in Table 2.

### (Comparative Example 5)

A binder composition was loaded into a fillable container, the fillable container was sealed, and then the fillable container was stored for 3 months in the same way as in Example 1 with the exception that the temperature of the binder composition in the feedstock tank was changed to 85°C. After this storage, the oxygen concentration and the absolute humidity of the gas phase portion in the fillable container were checked, and the binder composition in the container was evaluated. The results are shown in Table 2.

### (Comparative Example 6)

A binder composition was loaded into a fillable container, the fillable container was sealed, and then the fillable container was stored for 3 months in the same way as in Example 1 with the exception that the temperature of the binder composition in the feedstock tank was changed to 40°C, the temperature of the loading environment was changed to -5°C, and the temperature of the fillable container at the start of loading was changed to -5°C. After this storage, the oxygen concentration and the absolute humidity of the gas phase portion in the fillable container were checked, and the binder composition in the container was evaluated. The results are shown in Table 2.

### (Comparative Example 7)

A binder composition was loaded into a fillable container in the same way as in Example 1 with the exception that the temperature of the fillable container at the start of loading was changed to 50°C. The fillable container into which the binder composition had been loaded was subsequently stored for 3 months in the same way as in Example 1 with the exception that the temperature at which the fillable container was stored was changed to 50°C. After this storage, the oxygen concentration and the absolute humidity of the gas phase portion in the fillable container were checked, and the binder composition in the container was evaluated. The results are shown in Table 2.

### (Comparative Example 8)

The binder composition was changed to a composition of the acrylic polymer and NMP that contained 28% of solid content of the acrylic polymer and had a water concentration of 710 ppm and a viscosity of 2,900 mPa·s. With the exception that the binder composition described above was used, the binder composition was loaded into a fillable container, the fillable container was sealed, and then the fillable container was stored for 3 months in the same way as in Example 1. After this storage, the oxygen concentration and the absolute humidity of the gas phase portion in the fillable container were checked, and the binder composition in the container was evaluated. The results are shown in Table 2.

**Table 1**

| | | Example 1 | Example 2 | Example 3 | Example 4 | Example 5 | Example 6 | Example 7 | Example 8 |
|---|---|---|---|---|---|---|---|---|---|
| Type of polymer in binder composition | | Acrylic polymer | Acrylic polymer | Acrylic polymer | Acrylic polymer | Acrylic polymer | Acrylic polymer | Diene polymer | Fluorovinyl polymer |
| Temperature ofbinder composition in feedstock tank (°C) | | 50 | 35 | 65 | 50 | 35 | 50 | 50 | 50 |
| Loading environment temperature (°C) | | 25 | 25 | 25 | 25 | 10 | 25 | 25 | 25 |
| Temperature of fillable container at start of loading (°C) | | 25 | 25 | 25 | 25 | 10 | 25 | 25 | 25 |
| Loading atmosphere gas | Type | Nitrogen | Nitrogen | Nitrogen | Argon | Nitrogen | Argon | Nitrogen | Nitrogen |
| | Oxygen concentration (vol%) | 0.1 | 0.1 | 0.1 | 0.1 | 0.1 | 3.0 | 0.1 | 0.1 |
| | Absolute humidity (g/kg) | 0.6 | 0.6 | 0.6 | 1.1 | 0.6 | 1.1 | 0.6 | 0.6 |
| Storage temperature | | Normal temperature | Normal temperature | Normal temperature | Normal temperature | Normal temperature | Normal temperature | Normal temperature | Normal temperature |
| Oxygen concentration of gas phase portion in fillable container after 3 months of storage (vol%) | | < 0.2 | < 0.2 | < 0.2 | < 0.2 | < 0.2 | < 0.2 | < 0.2 | < 0.2 |
| Absolute humidity of gas phase portion in fillable container after 3 months of storage (g/kg) | | < 1 | < 1 | < 1 | < 1 | < 1 | < 1 | < 1 | < 1 |
| Water concentration of liquid phase portion in fillable container after 3 months of storage (ppm) | | 580 | 490 | 600 | 620 | 650 | 630 | 220 | 370 |
| Viscosity of liquid phase portion in fillable container after 3 months of storage (mPa·s) | | 650 | 630 | 660 | 680 | 700 | 680 | 1200 | 2100 |
| Preservation stability | Color change | A | A | A | A | A | B | A | A |
| | Aggregates | A | A | A | A | A | A | A | A |
| Coatability | Aggregates | A | A | A | A | A | A | A | A |
| | Pinholes | A | A | A | B | B | B | A | C |

**Table 2**

| | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Type of polymer in binder composition | | Acrylic polymer | Acrylic polymer | Acrylic polymer | Acrylic polymer | Acrylic polymer | Acrylic polymer | Acrylic polymer | Acrylic polymer |
| Temperature of binder composition in feedstock tank (°C) | | 10 | 10 | 50 | 50 | 85 | 40 | 50 | 50 |
| Loading environment temperature (°C) | | 10 | 25 | 25 | 25 | 25 | -5 | 25 | 25 |
| Temperature of fillable container at start of loading (°C) | | 10 | 25 | 25 | 25 | 25 | -5 | 50 | 25 |
| Loading atmosphere gas | Type | Air | Nitrogen | Nitrogen | Nitrogen | Nitrogen | Nitrogen | Nitrogen | Nitrogen |
| | Oxygen concentration (vol%) | 20.5 | 0.1 | 0.1 | 9.0 | 0.1 | 0.1 | 0.1 | 0.1 |
| | Absolute humidity (g/kg) | 5.5 | 0.6 | 3.0 | 0.8 | 0.6 | 0.6 | 0.6 | 0.6 |
| Storage temperature | | Not stored because condensation formed on wall of fillable container straight after loading | Normal temperature | Normal temperature | Normal temperature | Normal temperature | Normal temperature | 50°C | Normal temperature |
| Oxygen concentration of gas phase portion in fillable container after 3 months of storage (vol%) | | | < 0.2 | < 0.2 | 8 | < 0.2 | < 0.2 | < 0.2 | < 0.2 |
| Absolute humidity of gas phase portion in fillable container after 3 months of storage (g/kg) | | | < 1 | 4 | < 1 | < 1 | 3 | < 1 | < 1 |
| Water concentration of liquid phase portion in fillable container after 3 months of storage (ppm) | | | 1200 | 2200 | 640 | 580 | 1260 | 640 | 670 |
| Viscosity of liquid phase portion in fillable container after 3 months of storage (mPa·s) | | | 800 | 1000 | 670 | 3600 | 980 | 3300 | 4200 |
| Preservation stability | Color change | Not evaluated | A | B | D | D | A | D | A |
| | Aggregates | | C | D | A | C | C | B | C |
| Coatability | Aggregates | | C | D | A | C | D | B | C |
| | Pinholes | | C | D | C | E | D | D | E |

The presently disclosed binder composition storage method provides excellent preservation stability as can be seen from Tables 1 and 2. This indicates that loss of binder composition due to storage can be reduced. Moreover, a binder composition stored by the presently disclosed binder composition storage method has excellent coatability. This indicates that the yield in battery production is significantly improved.

## Claims

1. A binder composition storage method for storing a binder composition containing a binder and an organic medium in a fillable container, comprising:
setting an oxygen concentration of 5 vol% or less and an absolute humidity of 2 g/kg or less for a gas phase portion of the fillable container after the binder composition has been stored in the fillable container for 3 months; and
setting a water concentration of 1,000 ppm or less and a viscosity of 3,000 mPa·s or less for a liquid phase portion of the fillable container after the binder composition has been stored in the fillable container for 3 months.

2. The binder composition storage method according to claim 1, further comprising setting a temperature of not lower than 31°C and not higher than 70°C for the binder composition during loading of the binder composition into the fillable container.

3. The binder composition storage method according to claim 1 or 2, further comprising setting a temperature of not lower than 5°C and not higher than 35°C for the fillable container during loading of the binder composition into the fillable container.

4. The binder composition storage method according to any one of claims 1 to 3, wherein the binder composition that is loaded into the fillable container has a viscosity of 2,500 mPa·s or less.

5. The binder composition storage method according to any one of claims 1 to 4, wherein an atmosphere inside the fillable container during loading of the binder composition into the fillable container is set as an inert gas atmosphere having an oxygen concentration of 5 vol% or less and an absolute humidity of 2 g/kg or less.
